(19) Europäisches Patentamt / European Patent Office / Office européen des brevets

(11) **EP 4 565 540 B1**

(12) **EUROPEAN PATENT SPECIFICATION**

(45) Date of publication and mention
of the grant of the patent:
**05.08.2026  Bulletin 2026/32**

(21) Application number: **23748494.4**

(22) Date of filing: **25.07.2023**

(51) International Patent Classification (IPC):
***C03C 17/36*** *(2006.01)*

(52) Cooperative Patent Classification (CPC):
**C03C 17/36; C03C 17/3626; C03C 17/3639;
C03C 17/3644; C03C 17/366; C03C 17/3681**

(86) International application number:
**PCT/EP2023/070646**

(87) International publication number:
**WO 2024/028175 (08.02.2024 Gazette 2024/06)**

(54) **LOW-EMISSIVITY AND ANTI-SOLAR GLAZING**

EMISSIONSARME SONNENSCHUTZVERGLASUNG

VITRAGE À FAIBLE ÉMISSIVITÉ ET ANTI-SOLAIRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:   **05.08.2022   EP 22188947**

(43) Date of publication of application:
**11.06.2025   Bulletin 2025/24**

(73) Proprietor: **AGC Glass Europe
1348 Louvain-La-Neuve (BE)**

(72) Inventor: **MÉNDEZ FERNÁNDEZ, Álvaro
6041 Gosselies (BE)**

(74) Representative: **AGC Glass Europe
Technovation Centre
Intellectual Property Department
Rue Louis Blériot 12
6041 Gosselies (BE)**

(56) References cited:
**WO-A1-2014/125083      WO-A1-2015/067895
WO-A1-2020/157440**

## Description

## Technical Field

The present invention relates to glazing systems that have anti-solar properties and that have low visible reflectance on both sides of the glazing and that are temperable. These glazings, which have low light transmission, can be incorporated into windows of buildings or used in the field of automotive glazing.

## Background Art

WO2020157440A1 describes glazings that have anti-solar properties. These glazings comprise a sequence a first dielectric coating, a first silver layer, a second dielectric coating, a second silver layer, a third dielectric coating. These layer stacks further comprise two absorbing layers in two dielectric coatings to achieve the required low reflectance and energetical properties. The layer stacks of WO2020157440A1 however further comprise NiCr barrier layers above and below each silver layer. Despite declarations to the contrary in WO2020157440A1, these NiCr barrier layers are well known to provide light absorption, for NiCr k=3.5, and thus also participate as additional absorbing layers in addition to their barrier layer functions. Also documents WO2015067895A1 and WO2014125083A disclose similar glazing units having anti-solar properties.

In some cases, an operation to mechanically reinforce the glazing, such as thermal toughening of the glass sheet or sheets, becomes necessary to improve the resistance to mechanical stresses. For particular applications, it may also become necessary to give the glass sheets a more or less complex curvature by means of a bending operation at high temperature. In the processes of production and shaping of glazing systems there are certain advantages to conducting these heat treatment operations on the already coated substrate instead of coating an already treated substrate. These operations are conducted at a relatively high temperature, which is the temperature at which the functional layer based on infrared reflective material, e.g., based on silver, tends to deteriorate and lose its optical properties and properties relating to infrared radiation. These heat treatments consist in particular of heating the glass sheet to a temperature higher than 560° C in air, e.g., between 560° C and 700° C, and in particular around 640° C to 670° C, for a period of about 3, 4, 6, 8, 10, 12 or even 15 minutes, depending on the type of treatment and the thickness of the sheet. In the case of a bending treatment, the glass sheet may then be bent to the desired shape. The toughening treatment then consists of abruptly cooling the surface of the flat or bent glass sheet by air jets or cooling fluid to obtain a mechanical reinforcement of the sheet.

Therefore, in the case where the coated glass sheet must undergo a heat treatment, quite specific precautions must be taken to form a coating structure that is able to withstand a thermal toughening and/or bending treatment, sometimes referred to hereafter by the term "temperable", without losing the optical and/or energy properties it has been created for. In particular, the dielectric materials used to form the dielectric coatings must withstand the high temperatures of the heat treatment without exhibiting any adverse structural modification. In WO2020157440A1, the NiCr barrier layers, while necessary for achieving the necessary light absorption, induce large changes in optical properties upon tempering, in particular a reduction of light absorption. Further changes upon tempering of these coatings are due to the oxidation of absorber layers in contact with oxide layers. In consequence, these coatings are not temperable.

Another requirement that must be increasingly taken into account results from the fact that products that have not been heat treated and others that have been heat treated must sometimes be combined with one another for the same application, e.g., within the same building facade. It is very interesting to provide such buildings with glazings bearing self-matchable coatings, that is coatings that have very similar esthetic properties whether they are heat strengthened or not. The coatings of WO2020157440A1 are not selfmatchable.

In addition, the formation of such solar control coatings must result in satisfactory colors both in reflection and transmission with demand tending towards the most complete neutrality possible. The difficulty is to combine the colorimetric requirements with those associated with "base" conditions: desired light transmission, low reflectance, ability to withstand heat treatment, all at the same time.

There is therefore a need in the art to provide anti-solar glazing that has low reflectance, is esthetically pleasing and that is temperable and preferably self-matchable.

## Summary of invention

It is an object of the present invention to develop a new type of anti-solar stack of thin layers that is effective in terms of optical and energy properties, and that is temperable. The resulting glazing may in particular have a low level of reflectance and/or a high selectivity. Also, anti-solar glazings have low light transmission, preferably ≤ 40%.

The following information is used in the present invention:

a. light transmission (LT) is the percentage of incident light flux, illuminant D65/2° , transmitted by the glazing.

b. light reflection (LR) is the percentage of incident light flux, illuminant D65/2° , reflected by the glazing. It may be measured on a single glazing from the layer side (LRc) or the substrate side (LRg). It may be measured on the external side of the building or vehicle (LRext) or the internal side of the building (LRint), in particular on a multiple glazing unit or a laminated glazing.

c. energy transmission (ET) is the percentage of incident energy radiation transmitted by the glazing calculated in accordance with standard EN410.

d. energy reflection (ER) is the percentage of incident energy radiation reflected by the glazing calculated in accordance with standard EN410. It may be measured on the external side of the building or vehicle (ERext) or the internal side of the building or vehicle (ERint).

e. solar factor (SF or g) is the percentage of incident energy radiation that is directly transmitted by the glazing, on the one hand, and absorbed by this, then radiated in the opposite direction to the energy source in relation to the glazing. It is here calculated in accordance with standard EN410.

f.

$$\text{Selectivity} = \text{LT/SF.}$$

g. the CIELAB 1976 values (L*a*b*) are used to define the tints. They are measured with illuminant D65/10° .

h.

$$\Delta E^* = [(L^*)^2 + (a^*)^2 + (b^{*2})]^{1/2}$$

represents the tint variation during the heat treatment, i.e. the difference between before and after heat treatment colors.

i. the resistance per square (R2) ("sheet resistance"), expressed in ohms per square ($\Omega/\square$), measures the electrical resistance of thin films.

When values are referred to as "in the range of between a and b", they may be equal to a or b.

The positioning of the stack of layers in a multiple glazing structure is given according to the classic sequential numbering of the faces of a glazing unit, face 1 being on the exterior of the building or vehicle and face 4 (in the case of a double-glazing unit) or face 6 (in the case of a triple glazing unit) on the interior.

When referring to silicon nitride layers herein, it should be understood that the layers may also incorporate a small quantity of aluminum, as is well-known in the art of magnetron sputtered coatings. Such aluminum is included as doping agent, generally in a quantity of 10 wt.% at most relative to wight of Si and Al.

For the sake of clarity, when using terms like "bottom", "top", "below", "above", "lower", "upper", "first" or "last" herein, it is always in the context of a sequence of layers starting from the glass below, going upward, further away from the glass. Such sequences may comprise additional intermediate layers, in between the defined layers, except when a direct contact is specified.

The present invention relates to a glazing unit according to claim 1 and the dependent claims present preferred embodiments.

The invention concerns a glazing unit comprising a transparent substrate (1) provided with a stack of thin layers comprising in an alternating arrangement of only two infrared radiation reflecting functional layers, referred to starting from the substrate surface as first functional layer Ag1 (4) and second functional layer Ag2 (9) and 3 dielectric coatings, referred to starting from the substrate surface as D1, D2, and D3, such that each functional layer is surrounded by dielectric coatings, thus forming a sequence starting from the substrate D1/Ag1/D2/Ag2/D3, wherein the two functional layers comprise silver, and only D1 and D2 each comprise one layer of absorbing material and characterized in that:

a. D1 comprises in sequence a bottom absorber layer sequence BA (2), in direct contact with the substrate, and a zinc oxide-comprising contact layer C1 (4), directly below and in contact with the overlying first functional layer Ag1 (5),

b. D2 comprises in sequence a zinc oxide-comprising contact layer C2 (6), directly above and in contact with the underlying first functional layer Ag1 (5), a middle absorber layer sequence MA, a zinc oxide-comprising contact layer C3 (10), below and in contact with the second functional layer Ag2 (11), and

c. D3 comprises in sequence a zinc oxide-comprising contact layer C4 (12), directly above and in contact with the underlying second functional layer Ag2 (11).

further characterized in that BA comprises a first layer of absorbing material AM1 inserted in a first silicon nitride comprising layer SiN1, and in that MA comprises a second layer of absorbing material AM2 inserted in a second silicon nitride comprising layer SiN2.

The bottom absorber layer sequence BA comprises a first layer of absorbing material inserted in a first silicon nitride comprising layer SiN1, meaning that SiN1 is separated in two parts. A part of SiN1 is below and in contact with AM1 and another part of SiN1 is above and in contact with AM1. In other words, the first layer of absorbing material AM1 is in between two sublayers of the first silicon nitride comprising layer, a lower sublayer SIN1a and an upper sublayer SiN1b.

The middle absorber layer sequence MA comprises a second layer of absorbing material inserted in a second silicon nitride comprising layer, meaning that SiN2 is separated in two parts. A part of SiN2 is below and in contact with AM2 and that another part of SiN2 is above and in contact with AM2. In other words, the second layer of absorbing material AM2 is in between two sublayers of the second silicon nitride comprising layer, a lower sublayer SIN2a and an upper sublayer SiN2b.

For the sake of clarity, the stack of layers of the present invention comprises only two layers of absorbing material. Only D1 and D2 each comprise one layer of absorbing material means that D3 comprises no layer of absorbing material.

According to an embodiment of the present invention, D1 comprises a first layer comprising a mixed oxide of zinc and tin ZSO1 (3) in between and optionally in contact with BA (2) and/or C1 (4).

According to an embodiment of the present invention, D2 comprises a second layer comprising a mixed oxide of zinc and tin ZSO2 (7) in between and optionally in contact with C2 (6) and/or MA (8).

According to an embodiment of the present invention, D2 comprises a third layer comprising a mixed oxide of zinc and tin ZSO3 (9) above and optionally in contact with MA (8), optionally below and in contact with C3 (10).

According to an embodiment of the present invention, D3 comprises a fourth layer comprising a mixed oxide of zinc and tin ZSO4 (13) above and in contact with C4 (12).

According to an embodiment of the present invention, D3 comprises above C4 (12) a layer comprising silicon nitride SiN3 (14), optionally above and in contact with ZSO4 (13).

According to an embodiment of the present invention, D3 comprises a toplayer TL (15) comprising a metal oxide or a metal nitride. TL may be the topmost layer in the stack, or the topmost permanent layer in the stack.

According to an embodiment of the present invention, the stack of thin layers comprises a temporary protection layer. Such temporary protection layers may protect the stack of thin layers during transport or manipulation of the glazing. The temporary protection layer may be removed upon heat treatment. It may for example comprise a carbon layer or a polymer layer, that may burn off during heat treatment.

**Brief description of drawings**

Figure 1 shows a schematic representation of a transparent substrate provided with a stack of thin layers according to an embodiment of the present invention.

Figure 2 shows a schematic representation of an absorber layer sequence according to an embodiment of the present invention.

Figure 3 shows a schematic representation of an absorber layer sequence according to an embodiment of the present invention.

**Description of embodiments**

Because of the particular selection of layers of the coating stack and in particular because of the configuration of the absorber layer sequences and the layers contacting the functional layers, a layer stack is obtained that shows on Glazing units may thus provide the following advantages, before or after heat treatment, (coating on a standard 6 mm thick clear soda-lime float glass sheet incorporated into a double glazing unit with another standard 6 mm thick clear soda-lime float glass sheet, space between glass sheets of 12 mm filled to 100% with air, stack of layers in position 2):

a. a low solar factor SF, with SF ≤ 21%, preferably SF ≤19.5%, more preferably ≤ 18.5% to enable reduction of the risk of excess overheating as a result of sunshine;

b. Low visible light reflectance, both for LRext and LRint, with LRext and LRint, independently comprised between 13% and 18%, and preferably LRint comprised between 10% and 17%;

c. High selectivity (ratio of visible light transmittance LT to solar factor SF) of LT/SF≥1.3, preferably LT/SF≥1.4

d. Transmittance of visible light 40% ≥ LT ≥ 20%;

e. Color values L*, a*, b*, in transmittance (LT) $40 \leq L^*_{LT} \leq 80$, $-4.1 \leq a^*_{LT} \leq -0.5$, $-1.3 \leq b^*_{LT} \leq 4.8$, preferably $50 \leq L^*_{LT} \leq 70$, $-3.5 \leq a^*_{LT} \leq -0.5$, $-1.2 \leq b^*_{LT} \leq 4.5$;

f. Color values L*, a*, b*, in outside reflection (LRext) $35 \leq L^*_{LRext} \leq 60$, $-2.3 \leq a^*_{LRext} \leq -0.5$, $-9.3 \leq b^*_{LRext} \leq -3.0$, preferably $40 \leq L^*_{LRext} \leq 52$, $-2.0 \leq a^*_{LRext} \leq -0.6$, $-7.8 \leq b^*_{LRext} \leq -3.7$;

g. Color values L*, a*, b*, in inside reflection (LRint) $35 \leq L^*_{LRint} \leq 60$, $-13.7 \leq a^*_{LRint} \leq 2.3$, $-15.1 \leq b^*_{LRint} \leq -1.6$, preferably $40 \leq L^*_{LRint} \leq 55$, $-11.5 \leq a^*_{LRint} \leq 2.0$, $-12.7 \leq b^*_{LRint} \leq 1.5$;

h. the possibility of being heat treated, the coating being resistant to high temperatures, or of being used without heat treatment;

i. an aesthetic appearance without flaw, with an extremely limited or even non-existent haze without or after heat treatment, and the absence of unacceptable spots after heat treatment;

j. the retention of optical and energy properties virtually unchanged after heat treatment allowing the use of products that have been heat treated or not one beside the other ("self-matchability"): no or little change in color in transmission and in reflection ($\Delta E^* \leq 8$, preferably $\leq 5$, more preferably $\leq 2$) and/or no or little change in light transmission and reflection and energy values ($\Delta$ = | (value before heat treatment) - (value after heat treatment) | $\leq 7$, preferably $\leq 6$), measured in a single glazing configuration.

k. an adequate chemical stability for use without heat treatment or for the time interval before heat treatment, and in particular a result of the climatic chamber test or the salt spray test according to standard EN1036-2012 that does not give any defect or any discoloration visible to the naked eye after 1 day, preferably after 3 days.

The inventors have indeed found that not only was it beneficial to provide layers of absorber material in the first two dielectrics of the stack of thin layers, but also to enclose the layers of absorber material in silicon nitride layers and at the same time enclose the functional layers in zinc oxide layers. This arrangement of layers in particular contributes to assure heat treatability of the stack of thin layers.

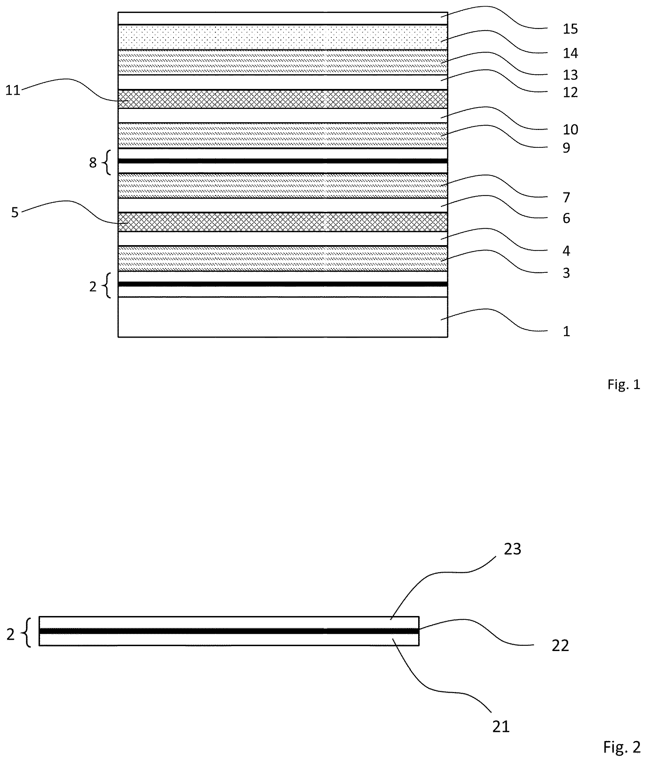

Figure 1 shows a transparent substrate (1) coated with a layer sequence comprising a bottom absorbing layer sequence BA (2), a mixed zinc tin oxide layer ZSO1 (3), a zinc oxide comprising contact layer C1 (4), a first functional layer Ag1 (5), a zinc oxide-comprising contact layer C2 (6), a second layer comprising a mixed oxide of zinc ZSO2 (7), a middle absorbing layer sequence MA (8), a third layer comprising a mixed oxide of zinc and tin ZSO3 (9), a zinc oxide-comprising contact layer C3 (10), a second functional layer Ag2 (11), a zinc oxide-comprising contact layer C4 (12), a fourth layer comprising a mixed oxide of zinc and tin ZSO4 (13), a layer comprising silicon nitride SiN3 (14), and a toplayer comprising a metal oxide or a metal nitride TL (15).

Figure 2 shows, in detail the bottom absorbing layer sequence BA (2) comprising a first layer of absorbing material AM1 (22) inserted in a first silicon nitride comprising layer SiN1, meaning that SiN1 is separated in two sublayers of the first silicon nitride comprising layer, a lower sublayer SIN1a (21) and an upper sublayer SiN1b (23).

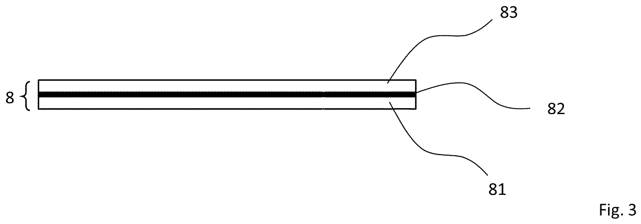

Figure 3 shows, in detail the bottom absorbing layer sequence MA (8) comprising a first layer of absorbing material AM1 (82) inserted in a first silicon nitride comprising layer SiN1, meaning that SiN1 is separated in two sublayers of the first silicon nitride comprising layer, a lower sublayer SIN1a (81) and an upper sublayer SiN1b (83).

It is noted that the invention relates to all possible combinations of features recited in the claims.

The individual layers of the stack of layers of the present invention are preferably deposited by magnetron sputtering. Metal or metal alloy layers are typically deposited in an inert gas atmosphere from metal or metal alloy sputtering targets. Oxide layers are typically deposited from a metal, metal alloy or silicon target in an atmosphere comprising oxygen, usually mixed with an inert gas such as argon or krypton for example. Alternately oxide layers may deposited from ceramic oxide targets in an inert gas atmosphere, possibly containing oxygen. Nitride layers are typically deposited from metal, metal alloy or silicon sputtering targets in nitrogen comprising atmospheres, usually mixed with an inert gas such as argon or krypton for example.

According to an embodiment of the present invention, the functional layers essentially consist of silver.

According to an embodiment of the present invention the transparent substrate is made of glass. The glass matrix composition is not particularly limited and may thus belongs to different glass categories. The glass may be a soda-lime-silicate glass, an alumino-silicate glass, an alkali-free glass, a boro-silicate glass, etc. Preferably, the glass sheet of the invention is made of a soda-lime glass.

According to an advantageous embodiment of the invention, combinable with previous embodiments, the glass sheet has a composition comprising a total iron (expressed in terms of $Fe_2O_3$) content ranging from 0.002 to 0.06 weight%. A total iron (expressed in the form of $Fe_2O_3$) content of less than or equal to 0.06 weight% makes it possible to obtain a glass sheet with almost no visible coloration. Preferably, the composition comprises a total iron (expressed in the form of $Fe_2O_3$) content ranging from 0.002 to 0.04 weight%. More preferably, the composition comprises a total iron (expressed in the form of $Fe_2O_3$) content ranging from 0.002 to 0.020 weight%. In the most preferred embodiment, the composition comprises a total iron (expressed in the form of $Fe_2O_3$) content ranging from 0.002 to 0.015 weight%.

According to a preferred embodiment, the transparent substrate of the invention is a float glass sheet. The transparent substrate, for example glass sheet, according to the invention may have a thickness of from 0.1 to 25 mm.

The layers of absorbing material, in their specific arrangement, help lower the visible light transmittance of the layer stack and at the same time lower the reflectance of the coated glazing.

According to an embodiment of the present invention, the sum $\Sigma$ AM of the geometrical thickness of AM1 and AM2 ranges from 2.4 to 6.1 nm, preferably from 2.4 to 5.8 nm, more preferably from 2.9 to 5.2 nm. The inventors have found that too high $\Sigma$ AM tends to degrade selectivity values, while too low $\Sigma$ AM does not permit to lower LT sufficiently for an anti-solar glazing.

According to an embodiment of the present invention, the geometrical thickness of AM1 ranges from 0.5 to 1.8 nm, preferably from 1.2 to 1.8 nm.

According to an embodiment of the present invention, the geometrical thickness of AM2 ranges from 0.5 to 4.4 nm, preferably from 1.6 to 3.6 nm.

According to an embodiment of the present invention, the layers of absorbing material may in particular comprise or consist of Nb, Ti, titanium nitride, niobium nitride, an alloy of Ni and Cr (NiCr alloy), or an alloy of Ni, Cr and W (NiCrW alloy) or a nitride of an alloy of Ni and Cr (NiCrN), or of an alloy of Ni, Cr and W (NiCrWN).

Absorbers TiN, NbN and Nb reach $1.0 \leq k \leq 2.0$ for $1.5 \leq n \leq 4.5$. More preferred absorbers of Ti, NiCr, nitride of NiCr and nitride of NiCrW reach $2.5 \leq k \leq 3.5$ for $2.5 \leq n \leq 3.5$, meaning that they are more efficient absorbers, with less impact on reflectance as less thickness is necessary to reach the desired absorption level. As is common in the art, n is the real part of the refractive index of a given material, while k is the imaginary part thereof. Here within, n and k are considered for a wavelength of 550nm.

The absorbing material may consist of an alloy or nitride of an alloy of Ni, Cr and W (NiCrW alloy) and comprise from 30% to 90%, preferably from 40% to 70% and advantageously from 45% to 65% by weight of tungsten, and nickel and chromium in a nickel/chromium weight ratio of between 100/0 and 50/50, preferentially 80/20. The nitride NiCrWN of NiCrW alloy may comprise up to 20wt% of nitrogen. NiCrWN may be formed unintentionally by nitrogen atmosphere leaking from nitride sputtering deposition up/downstream, to reach nitrogen weight % of up to 10%, preferably only up to 5%.

The absorbing material may consist of an alloy or nitride of an alloy of Ni and Cr in a Ni/Cr weight ratio of between 99/1 and 50/50, preferentially 80/20. The nitride NiCrN of NiCr alloy may comprise up to 20wt% of nitrogen, preferably up to 10 weight%.

NiCrN and NiCrWN are particularly preferred absorbers, as the risk of reacting with any migrating species of oxygen or nitrogen during heat treatments is minimized.

The material of the zinc oxide-comprising contact layers C1 to C4, underlying or overlying any functional layers in the stack of layers of the present invention, may be chosen independently among any of the following:

a. a zinc oxide doped with aluminium in a weight ratio of Zn/Al of at least 95/5, preferably at least 98/2;

b. pure ZnO (designated as iZnO);

c. zinc oxide doped with aluminium (designated as AZO) in a proportion of up to 10% by weight, alternately of up to 5% by weight at most, preferably of around 2% by weight.

These types of contact layers have the advantage of reducing the changes in opto-energetical properties, in particular color and transmittance, upon heat treatment. Metal based contact layers in particular show higher degrees of change in opto-energetical properties upon heat treatment and also need careful control of the deposition of overlying oxide and nitride layers as these lead to differing degrees of oxidation/nitration of any underlying metal layers. These zinc oxide based contact layers furthermore lead to more controlled growth of overlying functional layers, thereby lower functional layer thicknesses are required to reach desired degrees of emissivity.

The contact layers may be obtained by sputtering from a metal target of zinc, optionally doped with aluminum, in an oxygen containing atmosphere. Alternately the contact layers may be obtained by sputtering a ceramic target of aluminum doped zinc oxide in a non-oxidizing atmosphere. This is preferred when depositing a contact layer on a silver layer.

According to an embodiment of the present invention, the thickness of the contact layers comprising zinc oxide is preferably 10nm at most, more preferably 8 nm at most even more preferably 6 nm at most.

According to an embodiment of the present invention, the thickness of the contact layers comprising zinc oxide is preferably at least 2 nm, more preferably at least 3 nm.

According to an embodiment of the present invention the thickness of D1 is comprised between 40 and 68nm, preferably between 49 and 57nm.

According to an embodiment of the present invention the thickness of D2 is comprised between 65 and 130nm, preferably between 75 and 122nm, more preferably between 93 and 102nm.

According to an embodiment of the present invention the thickness of D3 is comprised between 25 and 44nm, preferably between 31 and 37nm.

Preferably the thickness of D2 is larger than the thickness of D1, and D3.

Preferably the ratio of the thickness of D1 to the thickness of D3 is comprised between 0.8 and 1.4 .

The thicknesses of Ag1 and Ag2 may be adjusted, individually and/or together, so as to obtain the desired energetical and optical properties. Too low silver thicknesses were found to be detrimental for the solar factor, while too high silver thicknesses tend to increase light reflectance. According to an embodiment of the present invention the thicknesses of Ag1 and Ag2 are each comprised between 13 and 30 nm. Advantageously the thickness of Ag1 is comprised between 14 and 30 nm, more advantageously between 14 and 25nm. Advantageously the thickness of Ag2 is comprised between 13 and 20 nm, more advantageously between 13 and 17nm.

Advantageously, the sum $\Sigma$ Ag of the thicknesses of Ag1 and Ag2 ranges from 23.3 to 40.8nm, preferably from 27 to 37.5nm, more preferably from 28.5 to 34.5nm.

Advantageously, the thickness ratio of Ag1 to Ag2 ranges from 0.8 to 1.8, preferably from 1.0 to 1.5.

In an embodiment of the present invention, the ratio of sum of the thicknesses of the absorber layers, AM1 and AM2, to the sum of the thicknesses of the Ag1 and Ag2 ranges from 0.07 to 0.19, preferably from 0.07 to 0.16, more preferably from 0.09 to 0.16. Higher ratios tend to decrease the selectivity.

In an advantageous embodiment of the present invention, geometrical thickness of the silicon nitride layer SiN1 is comprised between 21 and 59nm, preferably between 26 and 50nm.

In an advantageous embodiment of the present invention, geometrical thickness of the silicon nitride layer SiN2 is comprised between 20 and 40nm, preferably between 25 and 36nm, more preferably between 28 and 34nm.

In a preferred embodiment of the present invention, the layers of zinc-tin mixed oxide are layers in which the proportion of zinc-tin is close to 50-50% by weight ($Zn_2SnO_4$), e.g. 52-48 Wt.%. The zinc-tin mixed oxide may be advantageous in that it has a good deposition rate compared, for example, to $SiO_2$ or $Al_2O_3$, and/or in that it has a good chemical stability compared, for example, to pure ZnO or bismuth oxide. Moreover, it may be advantageous in that it has less tendency to generate haze after heat treatment of the stack compared, for example, to the oxides of Ti or Zr.

C1 and C3 below and in contact with Ag1 and Ag2 respectively, are sometimes referred to as a "nucleation" or "wetting" layers, which assist the growth of the silver on top of it and help increase the sheet resistance of the product.

In an embodiment of the present invention, C1, C2, C3 and/or C4 consist of zinc oxide or alternately doped with other metals, e.g. aluminium, in a proportion generally of 10% by weight at most, preferably around 2% by weight.

In an embodiment of the present invention, C1, C2, C3 and/or C4 have a thickness of 15 nm at most, preferably in the range of between 1.5 and 10 nm, more preferably between 3 and 10 nm.

In D1, D2, and D3, any one of the first, second and third silicon nitride comprising layers is not necessarily stoichiometric and may comprise other elements. The silicon nitride comprising layers in the present invention's layer stack may prevent in particular oxygen from migrating through the layer stack towards the absorber layers, in particular upon heat treatment.

In an embodiment of the present invention, these silicon nitride comprising layers are chosen among $Si_3N_4$, $Si_xN_y$, wherein the atomic ratio Si/N ranges from 0.6 to 0.9, preferably from 0.7 to 0.8, and a mixed nitride of silicon and zirconium, with a weight ratio of Si/Zr ranging between 70/30 and 50/50, preferably ranging between 65/35 and 55/45. These silicon nitride comprising layers may comprise aluminum at a weight ratio Al/Si up to 10%.

In a preferred embodiment of the present invention, in D1, D2, and D3, any one of the first, second and third silicon nitride comprising layers is preferably close to stoichiometric $Si_3N_4$, that is it comprises silicon and nitrogen in an atomic ratio Si/N of at least 0.72 and at most 0.78, preferably the atomic ratio Si/N is at least 0.74 and at most 0.76. This provides for low visible adsorption and additionally reduces the amount of color change upon heat treatment compared to $Si_xN_y$ which

is further away from stoichiometry.

According to an embodiment of the present invention the thickness of any of the silicon nitride comprising layers SiN1 and SiN2 is at least 20nm, advantageously at least 28nm. Such minimum thicknesses may be necessary to provide these layers' beneficial effects.

According to an embodiment of the present invention, the thickness of any of the silicon nitride comprising layers SiN1 and SiN2 is at most 50 nm, advantageously at most 40nm. Such thicknesses may be necessary to limit intrinsic stress within these layers which may lead to a degradation of mechanical and/or chemical durability, in particular as there are three silicon nitride comprising layers present in the layer stack.

According to a preferred embodiment of the present invention, in D1, AM1 is inserted in the first silicon nitride layer SiN1 so that at least 10 nm of the first silicon nitride layer thickness is below and at least 10 nm of the silicon nitride layer thickness is above the AM1 layer.

According to a preferred embodiment of the present invention, in D2, AM2 is inserted in the second silicon nitride layer SiN2 so that at least 10 nm of the second silicon nitride layer thickness is below and at least 10 nm of the second silicon nitride layer thickness is above the nitride layer.

Inserting the absorber layers in the silicon nitride layers protects the absorber layers from oxidation not only upon deposition of subsequent oxide layers, but also upon heat treatment.

In an embodiment of the present invention, in D1, D2, and D3, any one of the first, second, and third layers comprising a mixed oxide of zinc and tin, comprises a mixed oxide of zinc and tin is wherein the weight ratio of zinc to tin, Zn/Sn, may range from 1/9 to 9/1. Advantageously the proportion of zinc-tin is close to 50-50% by weight, e.g. 52-48 Wt.% and for example consist of $Zn_2SnO_4$.

According to an embodiment of the present invention, in D1, D2, and D3, any one or more of the first, second, and third layers comprising a mixed oxide of zinc and tin has a thickness of at least 10 nm, more preferably at least 20 nm. Its thickness is preferably 50 nm at most, more preferably 45 nm at most.

According to a preferred embodiment of the present invention, in D1, the first layer comprising a mixed oxide of zinc and tin ZSO1 has a thickness of at least 20 nm, more preferably at least 25 nm. Furthermore, its thickness may be 60 at most, preferably 50 nm at most, more preferably 45 nm at most.

According to a preferred embodiment of the present invention, in D2, the second layer comprising a mixed oxide of zinc and tin ZSO2 has a thickness of at least 10 nm, more preferably at least 15 nm. Furthermore, its thickness may preferably be 45 nm at most, preferably 40 nm at most.

According to a preferred embodiment of the present invention, in D2, the third layer comprising a mixed oxide of zinc and tin ZSO3 has a thickness of at least 1 nm, more preferably at least 3 nm. Furthermore, its thickness may preferably be 12 nm at most, more preferably 10 nm at most, even more preferably 8 nm at most.

According to an embodiment of the present invention, in D3 the toplayer comprising a metal oxide or a metal nitride TL is a layer comprising titanium and/or zirconium or a mixed oxide of silicon and zirconium or a mixed nitride of silicon and zirconium. Such a layer provides in particular mechanical protection to the stack of layers.

According to an embodiment of the present invention, the metal oxide or metal nitride toplayer of D3 is the last layer of the layer stack, the outermost layer. Temporary protective means such as removable plastic films or carbon films may however be provided on this last permanent layer.

In an advantageous embodiment of the present invention, the topcoat comprises at least $TiO_y$ and $ZrO_z$, and optionally $SiO_x$, wherein x, y, z may range from 1.8 to 2.2, wherein the topcoat comprises

    a. from 8 to 49 at% titanium,

    b. from 51 to 92 at% zirconium,

    c. from 0 to 9 at% silicon,

for a total of 100 at% of the metals, and wherein the topcoat has a thickness from 0.1 to 10 nm; to improve durability by increasing the abrasion resistance by at least 20%, alternatively by at least 30%, alternatively by at least 40%.

In some embodiments of the present use, compatible with other embodiments of the present invention, the above ranges for the Ti, Zr and Si in the topcoat may independently vary for one from the other. The amount of Ti may alternatively range from 10 to 47 at%, alternatively from 12 to 46 at%. The amount of Zr may alternatively range from 53 to 90 at%. The amount of Si may alternatively range from 1 to 8 at%, alternatively from 2 to 7 at%. These amounts may thus vary independently for each metal, provided the total is 100 at% of the metal, including impurities, as discussed above.

In an advantageous embodiment of the present invention, the metal oxide or metal nitride toplayer of D3 consists of an oxide or substoichiometric oxide of at least one element selected from Ti and Zr, more preferably of a titanium-zirconium mixed oxide, e.g. in a weight ratio of $TiO_y/ZrO_z$ of close to 65/35. Such a layer may provide particular good chemical and/or mechanical stability of the glazing.

Traces of Yttrium may be present in any Zr containing layers of the present layer stack.

In another advantageous embodiment of the present invention, the metal oxide or metal nitride toplayer of D3 consists of a mixed nitride of silicon and zirconium. Advantageously, the mixed nitride of silicon and zirconium having a Si/Zr atomic ratio of at least 1 or at least 4. Advantageously the mixed nitride of silicon and zirconium having a Si/Zr atomic ratio of at most 12 or at most 6.

In another advantageous embodiment of the present invention, the metal oxide or metal nitride toplayer of D3 consists of mixed oxide of silicon and zirconium which may comprise 5 to 50 mol% of zirconium oxide, preferably 8 to 20 mol%. The layer of mixed silicon zirconium oxide may have a geometrical thickness ranging of from 1 to 10 nm, alternatively of from 1.5 to 8 nm.

The toplayer in D3 preferably has a geometric thickness of at least 1 nm, preferably at least 1.5 nm. Its geometric thickness is 5 nm at most, advantageously 3 nm at most.

Particular embodiments of the invention will now be described by way of examples.

All thicknesses of the examples are given in nm. All the layers have been deposited using magnetic field-assisted cathodic sputtering under vacuum. Table 1 shows the sequence of layers of the exemplary layer stacks and their composition. Tables 2a and 2b below show the layer thicknesses for the examples.

Table 1 - sequence of layers exemplary layer stacks.

| Stack of layers | | | | Layer Reference |
|---|---|---|---|---|
| D1 | BA | SiNla | $Si_3N_4$ | (21) |
| | | AM1 | NiCrW | (22) |
| | | SiN1b | $Si_3N_4$ | (23) |
| | ZSO1 | | $Zn_2SnO_4$ | (3) |
| | C1 | | ZnO:Al | (4) |
| | Ag1 | | | (5) |
| D2 | C2 | | ZnO:Al | (6) |
| | ZSO2 | | $Zn_2SnO_4$ | (7) |
| | MA | SiN2a | SiN | (8a) |
| | | AM2 | NiCrW | (8b) |
| | | SiN2b | SiN | (8c) |
| | ZSO3 | | $Zn_2SnO_4$ | (9) |
| | C3 | | ZnO:Al | (10) |
| | Ag2 | | | (11) |
| D3 | C4 | | ZnO:Al | (12) |
| | ZSO4 | | $Zn_2SnO_4$ | (13) |
| | SiN3 | | $Si_3N_4$ | (14) |
| | TL | | TZO | (15) |

Table 2a - exemplary layer stacks, thicknesses in nm

| Layer Ref. | Ex1 | Ex2 | Ex3 | Ex4 | Ex5 | Ex6 |
|---|---|---|---|---|---|---|
| (21) | 14.6 | 19.0 | 13.9 | 14.0 | 15.1 | 14.2 |
| (22) | 1.3 | 1.4 | 1.3 | 1.5 | 1.4 | 1.7 |
| (23) | 14.6 | 16.6 | 19.0 | 12.9 | 18.7 | 14.4 |
| (3) | 14.4 | 14.4 | 11.5 | 18.0 | 12.8 | 16.5 |
| (4) | 5.0 | 5.0 | 5.0 | 5.0 | 5.0 | 5.0 |
| (5) | 18.7 | 18.0 | 15.0 | 19.1 | 17.3 | 21.4 |
| (6) | 3.0 | 3.0 | 3.0 | 3.0 | 3.0 | 3.0 |

(continued)

| Layer Ref. | Ex1 | Ex2 | Ex3 | Ex4 | Ex5 | Ex6 |
|---|---|---|---|---|---|---|
| (7) | 22.1 | 21.9 | 31.6 | 19.1 | 31.5 | 16.6 |
| (8a) | 12.5 | 12.5 | 12.5 | 12.5 | 12.5 | 12.5 |
| (8b) | 1.7 | 1.9 | 2.9 | 2.2 | 3.6 | 2.3 |
| (8c) | 17.5 | 17.5 | 17.5 | 17.5 | 17.5 | 17.5 |
| (9) | 35.1 | 36.3 | 26.6 | 39.2 | 28.4 | 42.7 |
| (10) | 2.0 | 2.0 | 2.0 | 2.0 | 2.0 | 2.0 |
| (11) | 14.5 | 13.5 | 14.1 | 14.9 | 14.4 | 15.7 |
| (12) | 3.0 | 3.0 | 3.0 | 3.0 | 3.0 | 3.0 |
| (13) | 16.2 | 17.0 | 14.4 | 15.1 | 15.2 | 13.7 |
| (14) | 15.0 | 15.0 | 15.0 | 15.0 | 15.0 | 15.0 |
| (15) | 1.6 | 1.6 | 1.6 | 1.6 | 1.6 | 1.6 |

Table 2b - exemplary layer stacks, thicknesses in nm

| Layer Ref. | Ex7 | Ex8 | Ex9 | Ex10 | Ex11 | Ex12 |
|---|---|---|---|---|---|---|
| (21) | 17.2 | 18.9 | 16.6 | 30.2 | 18.5 | 14.9 |
| (22) | 1.3 | 1.6 | 1.5 | 2.8 | 1.8 | 1.6 |
| (23) | 15.5 | 13.0 | 12.8 | 15.0 | 18.2 | 16.7 |
| (3) | 12.8 | 16.0 | 16.0 | 11.3 | 9.7 | 14.5 |
| (4) | 5.0 | 5.0 | 5.0 | 5.0 | 5.0 | 5.0 |
| (5) | 14.5 | 14.5 | 14.5 | 25.1 | 14.5 | 14.5 |
| (6) | 3.0 | 3.0 | 3.0 | 3.0 | 3.0 | 3.0 |
| (7) | 31.0 | 23.0 | 28.4 | 10.8 | 22.4 | 23.7 |
| (8a) | 12.5 | 12.5 | 12.5 | 12.5 | 12.5 | 12.5 |
| (8b) | 3.0 | 3.0 | 3.0 | 4.1 | 4.3 | 4.4 |
| (8c) | 17.5 | 17.5 | 17.5 | 17.5 | 17.5 | 17.5 |
| (9) | 28.3 | 36.4 | 30.1 | 52.0 | 40.5 | 38.7 |
| (10) | 2.0 | 2.0 | 2.0 | 2.0 | 2.0 | 2.0 |
| (11) | 14.3 | 13.5 | 13.4 | 16.8 | 13.5 | 13.4 |
| (12) | 3.0 | 3.0 | 3.0 | 3.0 | 3.0 | 3.0 |
| (13) | 16.0 | 15.8 | 12.9 | 13.1 | 11.9 | 12.3 |
| (14) | 15.0 | 15.0 | 15.0 | 15.0 | 15.0 | 15.0 |
| (15) | 1.6 | 1.6 | 1.6 | 1.6 | 1.6 | 1.6 |

TZO is a mixed oxide of titanium and zirconium with a $TiO_2/ZrO_2$ weight ratio of 65/35.

The NiCrW alloy comprises 65 wt% W and a Ni/Cr weight ratio of 80/20.

Tables 3a and 3b below show the sum $\Sigma$ AM of the thicknesses of the layers AM1 and AM2, the sum $\Sigma$ Ag of the thicknesses of Ag1 and Ag2 as well as the ratio of $\Sigma$ AM / $\Sigma$ Ag.

Table 3a

|  | Ex1 | Ex2 | Ex3 | Ex4 | Ex5 | Ex6 |
|---|---|---|---|---|---|---|
| $\Sigma$ AM (nm) | 3.0 | 3.3 | 4.2 | 3.8 | 5.1 | 4.1 |

(continued)

|  | Ex1 | Ex2 | Ex3 | Ex4 | Ex5 | Ex6 |
|---|---|---|---|---|---|---|
| Σ Ag (nm) | 33.3 | 31.5 | 29.1 | 34.0 | 31.7 | 37.1 |
| Σ AM / Σ Ag | 0.09 | 0.11 | 0.15 | 0.11 | 0.16 | 0.11 |

Table 3b

|  | Ex7 | Ex8 | Ex9 | Ex10 | Ex11 | Ex12 |
|---|---|---|---|---|---|---|
| Σ AM (nm) | 4.4 | 4.6 | 4.5 | 6.9 | 6.0 | 6.0 |
| Σ Ag (nm) | 28.8 | 28.0 | 27.9 | 41.9 | 28.0 | 27.9 |
| Σ AM / Σ Ag | 0.15 | 0.16 | 0.16 | 0.16 | 0.22 | 0.22 |

Tables 4a and 4b below, show the opto-energetical properties of the coating examples 1 to 12, with the coating on a standard 6 mm thick clear soda-lime float glass sheet incorporated into a double glazing unit with another standard 6 mm thick clear soda-lime float glass sheet, and a space between glass sheets of 12 mm filled to 90% with argon, stack of layers in position 2. As can be seen opto-energetical properties within the desired ranges are obtained. In particular low reflectances may be obtained together with a low solar factor for transmittance values ranging from 21.1 to 30.5%.

Table 4a - opto-energetical properties

|  | Ex1 | Ex2 | Ex3 | Ex4 | Ex5 | Ex6 |
|---|---|---|---|---|---|---|
| SF | 19.6 | 19.6 | 19.6 | 17.2 | 15.6 | 14.5 |
| LT | 30.5 | 29.1 | 27.9 | 25.6 | 21.2 | 21.1 |
| a*(LT) | -2.6 | -2.3 | -2.9 | -1.8 | -2.9 | -0.7 |
| b*(LT) | 3.9 | 4.0 | -0.1 | 3.4 | -0.7 | 3.7 |
| LRext | 16.0 | 16.0 | 12.9 | 16.0 | 16.3 | 17.3 |
| a*(LRext) | -0.8 | -0.7 | -1.9 | -0.8 | -0.9 | -1.1 |
| b*(LRext) | -4.8 | -7.5 | -3.8 | -6.8 | -4.6 | -7.7 |
| LRint | 14.3 | 14.1 | 14.1 | 14.1 | 14.5 | 16.1 |
| a*(LRint) | -6.4 | -4.3 | -1.4 | -7.4 | 0.6 | -11.4 |
| b*(LRint) | -12.5 | -11.5 | -8.9 | -11.1 | -12.6 | -10.8 |
| selectivity | 1.56 | 1.48 | 1.43 | 1.49 | 1.36 | 1.45 |

Table 4b - opto-energetical properties

|  | Ex7 | Ex8 | Ex9 | Ex10 | Ex11 | Ex12 |
|---|---|---|---|---|---|---|
| SF | 19.6 | 19.6 | 19.6 | 8.8 | 16.5 | 16.5 |
| LT | 28.1 | 27.4 | 27.1 | 9.8 | 21.2 | 21.3 |
| a*(LT) | -3.4 | -2.5 | -2.2 | 0.7 | -1.8 | -2.2 |
| b*(LT) | 1.6 | 2.6 | -0.3 | 3.8 | -0.4 | -1.1 |
| LRext | 12.7 | 12.9 | 12.7 | 17.9 | 14.3 | 14.8 |
| a*(LRext) | -1.2 | -0.8 | -2.0 | -0.9 | -0.9 | -1.0 |
| b*(LRext) | -4.1 | -6.2 | -3.8 | -8.6 | -5.1 | -6.2 |
| LRint | 13.4 | 11.7 | 13.8 | 16.2 | 13.9 | 13.8 |
| a*(LRint) | 1.9 | 0.6 | -2.8 | -9.3 | 0.3 | 1.3 |
| b*(LRint) | -12.5 | -9.4 | -4.3 | -7.9 | 1.4 | 0.5 |

(continued)

| | Ex7 | Ex8 | Ex9 | Ex10 | Ex11 | Ex12 |
|---|---|---|---|---|---|---|
| selectivity | 1.43 | 1.40 | 1.39 | 1.10 | 1.28 | 1.29 |

The examples 1 to 12 can be heat treated . Curing in a static oven at 670° C for 7 min. 30 sec. leads on examples 1 to 9 to no or little change in color in transmission and in reflection is observed, with $\Delta E^*$ remaining below 2. They can therefore be considered self-matchable

Examples 10 to 12 show worse selectivity values, which appears related to their higher $\Sigma$ AM / $\Sigma$ Ag values for Ex11 and Ex12 and related to high $\Sigma$ AM for Ex10. Also, in Ex6 and Ex10 LRext appears to be higher due to the higher $\Sigma$ Ag values.

Examples 1 to 9 have an adequate chemical stability with and without heat treatment. In the climatic chamber test and the salt spray test according to standard EN1036-2012 no defects or discolorations are visible to the naked eye after 1 day.

**Claims**

1.   A glazing unit comprising a transparent substrate (1) provided with a stack of thin layers comprising in an alternating arrangement of only two infrared radiation reflecting functional layers, referred to starting from the substrate surface as first functional layer Ag1 (5) and second functional layer Ag2 (11) and 3 dielectric coatings, referred to starting from the substrate surface as D1, D2, and D3, such that each functional layer is surrounded by dielectric coatings, wherein the two functional layers comprise silver, and only D1 and D2 each comprise one layer of absorbing material and **characterized in that**:

     a. D1 comprises in sequence a bottom absorber layer sequence BA (2), in direct contact with the substrate, and a zinc oxide-comprising contact layer C1 (4), directly below and in contact with the overlying first functional layer Ag1 (5),
     b. D2 comprises in sequence a zinc oxide-comprising contact layer C2 (6), directly above and in contact with the underlying first functional layer Ag1 (5), a middle absorber layer sequence MA , a zinc oxide-comprising contact layer C3 (10), in contact with the second functional layer Ag2 (11), and
     c. D3 comprises in sequence a zinc oxide-comprising contact layer C4 (12), directly above and in contact with the underlying second functional layer Ag2 (11).

     further **characterized in that** BA (2) comprises a first layer of absorbing material AM1 inserted in a first silicon nitride comprising layer SiN1, and **in that** MA (2) comprises a second layer of absorbing material AM2 inserted in a second silicon nitride comprising layer SiN2.

2.   A glazing unit according to claim 1 wherein the sum of the geometrical thickness of AM1 and AM2 ranges from 2.4 to 6.1 nm.

3.   A glazing unit according to any one preceding claim wherein the sum of the geometrical thicknesses of Ag1 and Ag2 ranges from 23.3 to 40.8nm.

4.   A glazing unit according to any one preceding claim wherein the ratio of the sum of the geometrical thickness of AM1 and AM2 to the sum of the geometrical thicknesses of Ag1 and Ag2 ranges from 0.07 to 0.19.

5.   A glazing unit according to any one preceding claim wherein D1 comprises a first layer comprising a mixed oxide of zinc and tin ZSO1 (3) in between and in contact with BA (2) and C1 (4).

6.   A glazing unit according to any one preceding claim wherein D2 comprises a second layer comprising a mixed oxide of zinc and tin ZSO2 (7) in between and in contact with C2 (6) and MA (8).

7.   A glazing unit according to any one preceding claim wherein D2 comprises a third layer comprising a mixed oxide of zinc and tin ZSO3 (9) above and in contact with MA (8), optionally below and in contact with C3 (10).

8.   A glazing unit according to any one preceding claim wherein D3 comprises a fourth layer comprising a mixed oxide of zinc and tin ZSO4 (13) above and in contact with C4 (12).

9. A glazing unit according to any one preceding claim wherein D3 comprises above C4 (12) a layer comprising silicon nitride SiN3 (14), preferably above and in contact with ZSO4 (13), and

10. A glazing unit according to any one preceding claim wherein D3 comprises a toplayer TL (15) comprising a metal oxide or a metal nitride

11. A glazing unit according to any one preceding claim, wherein the layers of absorbing material AM1 and AM2 comprise Nb, Ti, titanium nitride, niobium nitride, an alloy of Ni and Cr, an alloy of Ni, Cr and W, a nitride of an alloy of Ni and Cr, or of an alloy of Ni, Cr and W.

12. Glazing unit according to any one preceding claim, wherein AM1 has a geometrical thickness ranging from 0.5 to 3.3nm and AM2 has a geometrical thickness ranging from 0.5 to 5.3nm

13. Glazing unit according to any one preceding claim wherein geometrical thickness AM2 is greater than the geometrical thickness of AM1, preferably with a thickness ratio of AM1 to AM2 ranging from 0.3 to 0.9.

14. Glazing unit according to any one preceding claim, wherein geometrical thickness of D1 is comprised between 40 and 68nm, the geometrical thickness of D2 is comprised between 65 and 122nm, and the geometrical thickness of D3 is comprised between 25 and 44nm.

15. Glazing unit according to any one preceding claim, wherein the thickness of D2 is larger than the thickness of D1, and D3.

16. Glazing unit according to any one preceding claim, wherein the ratio of the thickness of D1 to the thickness of D3 is comprised between 1.1 and 2.0 .

17. Glazing unit according to any one preceding claim, wherein the first layer comprising a mixed oxide of zinc and tin ZSO1 has a thickness of a least 20 nm and at most 60nm.

18. Glazing unit according to any one preceding claim wherein the first and second silicon nitride comprising layers are chosen among $Si_3N_4$, $Si_xN_y$ wherein the atomic ratio Si/N ranges from 0.6 to 0.9, and a mixed nitride of silicon and zirconium, with a weight ratio of Si/Zr ranging between 70/30 and 50/50; said silicon nitride comprising layers optionally comprising up to 10wt% of Al.

19. Glazing unit according to any one preceding claim wherein the first and second silicon nitride comprising layers' thickness is at least 21nm and at most 50nm

20. Glazing unit according to any one preceding claim wherein the first second, third and fourth layers comprising a mixed oxide of zinc and tin, comprise a mixed oxide of zinc and tin is wherein the weight ratio of zinc to tin, Zn/Sn, ranges from 1/9 to 9/1.

21. Glazing unit according to any one preceding claim, wherein the fourth layer comprising a mixed oxide of zinc and tin has a thickness of at least 6nm and at most 23nm.

22. Glazing unit according to any one preceding claim wherein the toplayer comprising a metal oxide or a metal nitride TL is a layer comprising titanium and/or zirconium or a mixed oxide of silicon and zirconium or a mixed nitride of silicon and zirconium.

**Patentansprüche**

1. Verglasungseinheit umfassend ein transparentes Substrat (1), das mit einem Stapel dünner Schichten versehen ist, der in einer alternierenden Anordnung von nur zwei Infrarotstrahlen-reflektierenden Funktionsschichten, ausgehend von der Substratoberfläche als erste Funktionsschicht Ag1 (5) und zweite Funktionsschicht Ag2 (11) bezeichnet, und 3 dielektrischen Beschichtungen, ausgehend von der Substratoberfläche als D1, D2 und D3 bezeichnet, umfasst, so dass jede Funktionsschicht von dielektrischen Beschichtungen umgeben ist, wobei die beiden Funktionsschichten Silber umfassen, und nur D1 und D2 jeweils eine Schicht aus absorbierendem Material umfassen und **dadurch gekennzeichnet sind, dass**:

a. D1 nacheinander eine untere Absorberschichtenfolge BA (2) in direktem Kontakt mit dem Substrat und eine Zinkoxid-umfassende Kontaktschicht C1 (4) direkt unterhalb und in Kontakt mit der darüberliegenden ersten Funktionsschicht Ag1 (5) umfasst,

b. D2 nacheinander eine Zinkoxid-umfassende Kontaktschicht C2 (6) direkt über und in Kontakt mit der darunterliegenden ersten Funktionsschicht Ag1 (5), eine mittlere Absorberschichtsequenz MA, eine Zinkoxid-umfassende Kontaktschicht C3 (10) in Kontakt mit der zweiten Funktionsschicht Ag2 (11) umfasst, und

c. D3 nacheinander eine Zinkoxid-umfassende Kontaktschicht C4 (12) direkt oberhalb und in Kontakt mit der darunterliegenden zweiten Funktionsschicht Ag2 (11) umfasst,

ferner **dadurch gekennzeichnet, dass** BA (2) eine erste Schicht aus absorbierendem Material AM1 umfasst, das in eine erste Siliciumnitrid-umfassende Schicht SiN1 eingefügt ist, und dass MA (2) eine zweite Schicht aus absorbierendem Material AM2 umfasst, das in eine zweite Siliciumnitrid-umfassende Schicht SiN2 eingefügt ist.

2. Verglasungseinheit nach Anspruch 1, wobei die Summe der geometrischen Dicke von AM1 und AM2 in dem Bereich von 2,4 bis 6,1 nm liegt.

3. Verglasungseinheit nach einem der vorstehenden Ansprüche, wobei die Summe der geometrischen Dicken von Ag1 und Ag2 in dem Bereich von 23,3 bis 40,8 nm liegt.

4. Verglasungseinheit nach einem der vorstehenden Ansprüche, wobei das Verhältnis der Summe der geometrischen Dicke von AM1 und AM2 zu der Summe der geometrischen Dicken von Ag1 und Ag2 in dem Bereich von 0,07 bis 0,19 liegt.

5. Verglasungseinheit nach einem der vorstehenden Ansprüche, wobei D1 eine erste Schicht, die ein Mischoxid von Zink und Zinn ZSO1 umfasst (3), zwischen und in Kontakt mit BA (2) und C1 (4) umfasst.

6. Verglasungseinheit nach einem der vorstehenden Ansprüche, wobei D2 eine zweite Schicht, die ein Mischoxid aus Zink und Zinn ZSO2 umfasst (7), zwischen und in Kontakt mit C2 (6) und MA (8) umfasst.

7. Verglasungseinheit nach einem der vorstehenden Ansprüche, wobei D2 eine dritte Schicht umfasst, die ein Mischoxid aus Zink und Zinn ZSO3 umfasst (9), oberhalb und in Kontakt mit MA (8), gegebenenfalls unterhalb und in Kontakt mit C3 (10), umfasst.

8. Verglasungseinheit nach einem der vorstehenden Ansprüche, wobei D3 eine vierte Schicht, die ein Mischoxid aus Zink und Zinn ZSO4 umfasst (13), oberhalb und in Kontakt mit C4 (12) umfasst.

9. Verglasungseinheit nach einem der vorstehenden Ansprüche, wobei D3 oberhalb von C4 (12) eine Schicht, die Siliciumnitrid SiN3 umfasst (14), vorzugsweise oberhalb und in Kontakt mit ZSO4 (13) umfasst, und

10. Verglasungseinheit nach einem der vorstehenden Ansprüche, wobei D3 eine Deckschicht TL (15) umfasst, die ein Metalloxid oder ein Metallnitrid umfasst.

11. Verglasungseinheit nach einem der vorstehenden Ansprüche, wobei die Schichten von absorbierendem Material AM1 und AM2 Nb, Ti, Titannitrid, Niobnitrid, eine Legierung aus Ni und Cr, eine Legierung aus Ni, Cr und W, ein Nitrid einer Legierung aus Ni und Cr oder eine Legierung aus Ni, Cr und W umfassen.

12. Verglasungseinheit nach einem der vorstehenden Ansprüche, wobei AM1 eine geometrische Dicke in dem Bereich von 0,5 bis 3,3nm aufweist und AM2 eine geometrische Dicke in dem Bereich von 0,5 bis 5,3nm aufweist.

13. Verglasungseinheit nach einem der vorstehenden Ansprüche, wobei die geometrische Dicke AM2 größer als die geometrische Dicke von AM1 ist, vorzugsweise mit einem Dickenverhältnis von AM1 zu AM2 in dem Bereich von 0,3 bis 0,9.

14. Verglasungseinheit nach einem der vorstehenden Ansprüche, wobei die geometrische Dicke von D1 in dem Bereich zwischen 40 und 68 nm liegt, die geometrische Dicke von D2 in dem Bereich zwischen 65 und 122 nm liegt und die geometrische Dicke von D3 in dem Bereich zwischen 25 und 44 nm liegt.

15. Verglasungseinheit nach einem der vorstehenden Ansprüche, wobei die Dicke von D2 größer als die Dicke von D1 und D3 ist.

16. Verglasungseinheit nach einem der vorstehenden Ansprüche, wobei das Verhältnis der Dicke von D1 zu der Dicke von D3 in dem Bereich zwischen 1,1 und 2,0 liegt.

17. Verglasungseinheit nach einem der vorstehenden Ansprüche, wobei die erste Schicht, die ein Mischoxid aus Zink und Zinn ZSO1 umfasst, eine Dicke von wenigstens 20 nm und höchstens 60 nm aufweist.

18. Verglasungseinheit nach einem der vorstehenden Ansprüche, wobei die erste und die zweite Siliciumnitrid-umfassende Schicht ausgewählt sind aus $Si_3N_4$, $Si_xN_y$, wobei das Atomverhältnis Si/N in dem Bereich von 0,6 bis 0,9 liegt, und einem Mischnitrid von Silicium und Zirkonium, wobei ein Gewichtsverhältnis Si/Zr in dem Bereich von 70/30 bis 50/50 liegt; wobei die Siliciumnitridumfassenden Schichten gegebenenfalls bis zu 10 Gew.-% Al umfassen.

19. Verglasungseinheit nach einem der vorstehenden Ansprüche, wobei die Dicke der ersten und zweiten Siliciumnitrid-Schichten wenigstens 21 nm und höchstens 50 nm beträgt.

20. Verglasungseinheit nach einem der vorstehenden Ansprüche, wobei die erste, zweite, dritte und vierte Schicht, die ein Mischoxid von Zink und Zinn umfassen, ein Mischoxid von Zink und Zinn umfassen, bei dem das Gewichtsverhältnis von Zink zu Zinn, Zn/Sn, in dem Bereich von 1/9 bis 9/1 liegt.

21. Verglasungseinheit nach einem der vorstehenden Ansprüche, wobei die vierte Schicht, die ein Mischoxid aus Zink und Zinn umfasst, eine Dicke von wenigstens 6 nm und höchstens 23 nm aufweist.

22. Verglasungseinheit nach einem der vorstehenden Ansprüche, wobei die Deckschicht, die ein Metalloxid oder ein Metallnitrid umfasst TL, eine Schicht ist, die Titan und/oder Zirkonium oder ein Mischoxid von Silicium und Zirkonium oder ein Mischnitrid von Silicium und Zirkonium umfasst.

**Revendications**

1. Vitrage comprenant un substrat transparent (1) muni d'un empilement de couches minces comportant dans un agencement en alternance seulement deux couches fonctionnelles réfléchissant un rayonnement infrarouge, désignées en partant de la surface du substrat comme première couche fonctionnelle Ag1 (5) et deuxième couche fonctionnelle Ag2 (11) et 3 revêtements diélectriques, désignés en partant de la surface du substrat comme D1, D2, et D3, de manière à ce que chaque couche fonctionnelle soit entourée de revêtements diélectriques, dans lequel les deux couches fonctionnelles comprennent de l'argent, et seulement D1 et D2 comprennent chacun une couche de matériau absorbant et **caractérisé en ce que** :

    a. D1 comprend en séquence une séquence de couche d'absorbeur inférieure BA (2), en contact direct avec le substrat, et une couche de contact C1 (4) comprenant de l'oxyde de zinc, directement sous et en contact avec la première couche fonctionnelle sus-jacente Ag1 (5),
    b. D2 comprend en séquence une couche de contact C2 (6) comprenant de l'oxyde de zinc, directement sur et en contact avec la première couche fonctionnelle sous-jacente Ag1 (5), une séquence de couche d'absorbeur centrale MA, une couche de contact C3 (10) comprenant de l'oxyde de zinc, en contact avec la deuxième couche fonctionnelle Ag2 (11), et
    c. D3 comprend en séquence une couche de contact C4 (12) comprenant de l'oxyde de zinc, directement sur et en contact avec la deuxième couche fonctionnelle sous-jacente Ag2 (11).

**caractérisé en outre en ce que** BA (2) comprend une première couche de matériau absorbant AM1 insérée dans une première couche comprenant du nitrure de silicium SiN1, et **en ce que** MA (2) comprend une deuxième couche de matériau absorbant AM2 insérée dans une deuxième couche comprenant du nitrure de silicium SiN2.

2. Vitrage selon la revendication 1, dans lequel la somme de l'épaisseur géométrique de AM1 et AM2 se situe dans la plage de 2,4 à 6,1 nm.

**3.** Vitrage selon l'une quelconque des revendications précédentes, dans lequel la somme des épaisseurs géométriques de Ag1 et Ag2 se situe dans la plage de 23,3 à 40,8 nm.

**4.** Vitrage selon l'une quelconque des revendications précédentes, dans lequel le rapport de la somme de l'épaisseur géométrique de AM1 et AM2 sur la somme de l'épaisseur géométrique de Ag1 et Ag2 se situe dans la plage de 0,07 à 0,19.

**5.** Vitrage selon l'une quelconque des revendications précédentes, dans lequel D1 comprend une première couche comprenant un oxyde mixte de zinc et d'étain ZSO1 (3) entre et en contact avec BA (2) et C1 (4).

**6.** Vitrage selon l'une quelconque des revendications précédentes, dans lequel D2 comprend une deuxième couche comprenant un oxyde mixte de zinc et d'étain ZSO2 (7) entre et en contact avec C2 (6) et MA (8).

**7.** Vitrage selon l'une quelconque des revendications précédentes, dans lequel D2 comprend une troisième couche comprenant un oxyde mixte de zinc et d'étain ZSO3 (9) sur et en contact avec MA (8), éventuellement sous et en contact avec C3 (10).

**8.** Vitrage selon l'une quelconque des revendications précédentes, dans lequel D3 comprend une quatrième couche comprenant un oxyde mixte de zinc et d'étain ZSO4 (13) sur et en contact avec C4 (12).

**9.** Vitrage selon l'une quelconque des revendications précédentes, dans lequel D3 comprend au-dessus de C4 (12) une couche comprenant du nitrure de silicium SiN3 (14), de préférence sur et en contact avec ZSO4 (13), et

**10.** Vitrage selon l'une quelconque des revendications précédentes, dans lequel D3 comprend une couche supérieure TL (15) comprenant un oxyde métallique ou un nitrure métallique.

**11.** Vitrage selon l'une quelconque des revendications précédentes, dans lequel les couches de matériau absorbant AM1 et AM2 comprennent Nb, Ti, du nitrure de titane, du nitrure de niobium, un alliage de Ni et de Cr, un alliage de Ni, Cr et W, un nitrure d'un alliage de Ni et de Cr ou d'un alliage de Ni, Cr et W.

**12.** Vitrage selon l'une quelconque des revendications précédentes, dans lequel AM1 a une épaisseur géométrique allant de 0,5 à 3,3 nm et AM2 a une épaisseur géométrique allant de 0,5 à 5,3 nm.

**13.** Vitrage selon l'une quelconque des revendications précédentes, dans lequel l'épaisseur géométrique de AM2 est supérieure à l'épaisseur géométrique de AM1, de préférence avec un rapport d'épaisseur de AM1 sur AM2 allant de 0,3 à 0,9.

**14.** Vitrage selon l'une quelconque des revendications précédentes, dans lequel l'épaisseur géométrique de D1 est comprise entre 40 et 68 nm, l'épaisseur géométrique de D2 est comprise entre 65 et 122 nm, et l'épaisseur géométrique de D3 est comprise entre 25 et 44 nm.

**15.** Vitrage selon l'une quelconque des revendications précédentes, dans lequel l'épaisseur de D2 est supérieure à l'épaisseur de D1, et D3.

**16.** Vitrage selon l'une quelconque des revendications précédentes, dans lequel le rapport de l'épaisseur de D1 sur l'épaisseur de D3 est compris entre 1,1 et 2,0.

**17.** Vitrage selon l'une quelconque des revendications précédentes, dans lequel la première couche comprenant un oxyde mixte de zinc et d'étain ZSO1 a une épaisseur d'au moins 20 nm et d'au plus 60 nm.

**18.** Vitrage selon l'une quelconque des revendications précédentes, dans lequel les première et deuxième couches comprenant du nitrure de silicium sont choisies parmi $Si_3N_4$, $Si_xN_y$ dans lequel le rapport atomique Si/N va de 0,6 à 0,9, et un nitrure mixte de silicium et de zirconium, avec un rapport pondéral de Si/Zr se situant dans la plage entre 70/30 et 50/50 ; ledit nitrure de silicium comprenant des couches comprenant éventuellement jusqu'à 10 % en poids d'Al.

**19.** Vitrage selon l'une quelconque des revendications précédentes, dans lequel l'épaisseur des première et deuxième couches comprenant du nitrure de silicium est d'au moins 21 nm et d'au plus 50 nm.

**20.** Vitrage selon l'une quelconque des revendications précédentes, dans lequel les première, deuxième, troisième et quatrième couches comprenant un oxyde mixte de zinc et d'étain, comprennent un oxyde mixte de zinc et d'étain dans lequel le rapport pondéral de zinc sur étain Zn/Sn va de 1/9 à 9/1.

**21.** Vitrage selon l'une quelconque des revendications précédentes, dans lequel la quatrième couche comprenant un oxyde mixte de zinc et d'étain a une épaisseur d'au moins 6 nm et d'au plus 23 nm.

**22.** Vitrage selon l'une quelconque des revendications précédentes, dans lequel la couche supérieure comprenant un oxyde métallique ou un nitrure métallique TL est une couche comprenant du titane et/ou du zirconium ou un oxyde mixte de silicium et de zirconium ou un nitrure mixte de silicium et de zirconium.

Fig. 1

Fig. 2

Fig. 3

**EP 4 565 540 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020157440 A1
- WO 2015067895 A1
- WO 2014125083 A